# EUROPÄISCHE PATENTSCHRIFT

(11) **EP 3 571 093 B1**
(45) Veröffentlichungstag und Bekanntmachung des Hinweises auf die Patenterteilung: **05.04.2023**
(21) Anmeldenummer: 18702626.5
(22) Anmeldetag: 18.01.2018
(51) Int. Cl.: B60P 3/22, B60R 9/042, E02F 3/88

(54) **SAUGBAGGER MIT EINER VORRICHTUNG ZUR AUFNAHME UND ZUM TRANSPORT VON SCHLÄUCHEN ODER ROHREN**
DREDGER WITH A DEVICE FOR HANDLING AND TRANSPORTING HOSES OR PIPES
DRAGEU SUCEUSE AVEC UN DISPOSITF DE MANUTENTION ET TRANSPORT DE TUYAUX

(30) Priorität: 19.01.2017 DE 202017100264 U
(43) Veröffentlichungstag der Anmeldung: 27.11.2019
(73) Patentinhaber: RSP GMBH, 07318 Saalfeld (DE)
(72) Erfinder: RENGER, Karl-Heinz, 07318 Saalfeld (DE); RENGER, Marina, 07318 Saalfeld (DE); GRABER, Jens, 07318 Saalfeld OT Unterwirbach (DE)
(74) Vertreter: Engel, Christoph Klaus
(86) Internationale Anmeldenummer: PCT/EP2018/051223
(87) Internationale Veröffentlichungsnummer: WO 2018/134312

(56) Entgegenhaltungen:
- DE-A1- 2 931 882
- DE-A1-102012 003 226
- DE-C1- 4 421 030
- DE-U1- 9 016 448
- FR-A1- 2 970 992
- US-A1- 2012 263 561

## Beschreibung

Die vorliegende Erfindung betrifft einen Saugbagger mit einer Vorrichtung zur Aufnahme und zum Transport von Schläuchen oder Rohren. Eine Vorrichtung gemäß dem Stand der Technik ist in Dokument US 2012/263561 A1 offenbart.

In der DE 10 2015 105 836 B3 wird ein Saugbagger mit Strömungsumkehr beschrieben, wobei der Saugbagger der pneumatischen Aufnahme von festen oder flüssigem Sauggut mittels eines schnell strömenden Luftstromes durch einen Saugschlauch dient. Der Saugbagger weist einen Abscheider zur Abscheidung des Sauggutes auf. Der Abscheider dient als Sammelbehälter.

Die DE 20 2005 006 671 U1 beschreibt einen Saugbagger mit Sauggebläse und kippbarem Behälter. Der zwischen einem Saugrüssel und einem Sauggebläse angeordnete Behälter, dient dem Abscheiden und Sammeln von aufgesaugtem Material. Zum Entleeren ist der Behälter um eine Kippachse kippbar.

Die DE 10 2012 003 226 A1 zeigt einen kippbaren Behälter, insbesondere für Saugbagger. Der Saugbagger umfasst einen um eine Kippachse kippbaren Behälter zum Abscheiden und Sammeln von aufgesaugtem Material.

In der zum Anmeldezeitpunkt noch unveröffentlichten früheren Patentanmeldung DE 10 2016 105 850 desselben Anmelders ist einen Materialsammelbehälter eines Saugbaggers mit einem Sauganschluss an seiner hinteren Stirnwand beschrieben. Der Sauganschluss ist so an der hinteren Stirnwand positioniert, dass er im Querschnitt von der Symmetrieebene des Materialsammelbehälters gekreuzt wird.

Aus der DE 201 17 060 U1 ist ein Hebebock bekannt, der insbesondere auf einem Fahrzeug zum an Bord Heben von Lasten, wie beispielsweise das Saugrohr eines Saugbaggers, angeordnet werden kann. Der Hebebock ermöglicht es nur, ein einzelnes Rohr zu heben oder zu senken.

In der DE 29 31 882 A1 ist ein Dachständer für Kraftfahrzeuge, insbesondere PKW, mit einer Anordnung zum Halten und Befestigen schwerer Lasten beschrieben. An einem Trägerrahmen ist ein Kipprahmen schwenkbar gelagert. Der Kipprahmen besitzt einen teleskopartig ausziehbaren Ausleger. Ein die Last aufnehmender Schlitten ist entlang des Kipprahmens und des Auslegers beweglich geführt.

In der EP 1 055 560 A1 ist eine Lade-und Abladevorrichtung für eine lang gestreckte Last (z. B. eine Feuerwehrleiter) beschrieben. Eine Lasthalterung lässt sich aus einer horizontalen Lage auf dem Fahrzeugdach in eine geneigte Lage bewegen.

Die Aufgabe der vorliegenden Erfindung besteht ausgehend vom Stand der Technik darin, einen Saugbagger mit einer verbesserten Vorrichtung zur Verfügung zu stellen, die der Aufnahme und dem Transport von Schläuchen oder Rohren dient, wobei diese einfach und sicher transportiert werden können. Gleichzeitig soll diese Vorrichtung vor allem den Forderungen nach ausreichender Sicherheit bei der Auf- und Abnahme von Schläuchen und Rohren und anderer Baustellenausrüstung nachkommen sowie die Aufnahme bzw. die Abgabe solcher Bauteile erleichtern und beschleunigen. Zudem soll die Vorrichtung insbesondere für aus dem Stand der Technik bekannte kippbare Behälterlösungen zur Verfügung stehen.

Erfindungsgemäß erfolgt die Lösung der Aufgabe durch einen Saugbagger mit einer Vorrichtung zur Aufnahme und zum Transport von Rohren nach Anspruch 1.

Die Vorrichtung dient der Aufnahme und dem Transport von Schläuchen und Rohren. Soweit nachfolgend nur von Schläuchen gesprochen wird, sind damit immer auch Rohre gemeint, die in Bezug auf die Leitung von Medien dieselbe Funktionalität wie Schläuche besitzen. Ebenso sind generell gleichartige Bauteile gemeint, die sich in gleicher Weise durch die Vorrichtung transportieren lassen.

Die Vorrichtung dient der Aufnahme und dem Transport von Materialtransportschläuchen am Fahrzeug. Erfindungsgemäß handelt es sich bei dem Fahrzeug um einen Saugbagger. Das Fahrzeug weist einen Materialsammelbehälter zum Abscheiden und Sammeln von aufgesaugtem Material auf. Der Materialsammelbehälter umfasst einen um eine Deckelachse kippbaren Behälterdeckel. Der Materialsammelbehälter trägt den Behälterdeckel.

In einer ersten Ausführungsform umfasst die Vorrichtung einen Träger mit einer Schwenkachse, der auf dem Behälterdeckel anbringbar ist, sodass die Schwenkachse parallel zur Deckelachse verläuft. Die Deckelachse und die Schwenkachse verlaufen demnach an der gleichen Behälterseite bzw. Behälterdeckelseite. Der Träger ist bevorzugt aus einem stabilen Material, wie beispielsweise Stahl oder Edelstahl. Bevorzugt ist der Träger auf dem Behälterdeckel entlang dessen Seitenkanten ausgerichtet. Zum Schwenken des Trägers an der Schwenkachse weist die Vorrichtung einen Verstellantrieb auf, der bevorzugt durch mindestens einen Hydraulikzylinder gebildet wird. Der Verstellantrieb wirkt auf den Träger, an welchem der Verstellantrieb angeordnet ist. Durch das Schwenken des Trägers um die Schwenkachse mittels des Verstellantriebs kann der Träger eine Transportposition oder eine Arbeitsposition einnehmen.

Weiterhin umfasst die Vorrichtung eine Haltevorrichtung zur Aufnahme und zum Halten eines Schlauches oder eines Rohres, bevorzugt zur Aufnahme mehrerer Schläuche oder Rohre. Die Haltevorrichtung weist auf einem Gestell Aufnahmen für die einzelnen Schläuche oder Rohre auf, wobei das Gestell bevorzugt annähernd die Größe des Trägers aufweist, bevorzugt aus einem leichten, stabilen Material, beispielsweise Stahl oder Edelstahl hergestellt ist, und wobei die Aufnahmen bevorzugt an die Schlauch- bzw. Rohrdurchmesser anpassbar sind. Die Aufnahmen werden beispielsweise aus Stahl gefertigt und mit einem Gummiprofil überzogen. Alternativ sind die Aufnahmen entsprechend eines Schlauch- oder Rohrdurchmessers ausgebildet. Die Haltevorrichtung kann somit als Schlauchmagazin oder Rohrmagazin angesehen werden.

Die Haltevorrichtung ist über mindestens eine Linearführung, insbesondere eine Schienenführung mit dem Träger verbunden. Bevorzugt sind die Haltevorrichtung und der Träger mittels zwei parallel verlaufenden Schienenführungen verbunden. Die Haltevorrichtung, der Träger und die Schienenführung sind parallel zueinander ausgerichtet, so dass die Haltevorrichtung parallel zu dem Träger verfahrbar ist. Die Schienenführung ist winklig zur Schwenkachse ausgerichtet. Bei Verwendung mehrerer Schienenführungen sind diese parallel zueinander ausgerichtet.

Die Vorrichtung weist zudem eine Antriebseinheit zum Verfahren der Haltevorrichtung gegenüber dem Träger auf, wobei entlang der Schienenführung gefahren wird. Die Haltevorrichtung nimmt durch Verfahren mittels der Antriebseinheit eine obere Halteposition oder eine untere Entnahmeposition ein, wobei zwischen den beiden Positionen gefahren werden kann.

Der Materialsammelbehälter des erfindungsgemäßen Saugbaggers umfasst einen Behälterboden, einen Behälterdeckel sowie eine auf dem Behälterdeckel angeordnete Vorrichtung, die der hier beschriebenen Vorrichtung zur Aufnahme und zum Transport von Schläuchen oder Rohren und deren beschriebenen Ausführungsformen entspricht. Der Behälterdeckel ist um eine Deckelachse kippbar. Herkömmlich wird der Behälterdeckel zum Entleeren oder Befüllen des Behälters geöffnet. Nunmehr dient die damit sowieso vorhandene Schwenkmöglichkeit des Deckels um die Deckelachse aber auch dazu, den Träger der Vorrichtung zur Aufnahme und zum Transport von Schläuchen in eine weitgehend aufrecht stehende Position zu bringen.

Der Träger, der die Schwenkachse aufweist, ist auf dem Behälterdeckel angebracht, sodass die Schwenkachse parallel zur Deckelachse verläuft. Der Verstellantrieb, der zum Schwenken des Trägers um die Schwenkachse dient, ist vorzugsweise zwischen dem Behälterdeckel und dem Träger angeordnet und wirkt zwischen diesen. Somit kann der Träger eine zum Behälterdeckel parallele Transportposition und eine Arbeitsposition einnehmen. Während der Arbeitsposition liegt der Träger winklig zum Behälterdeckel und nimmt dabei bevorzugt eine vertikale ausgerichtete Position ein.

Bevorzugt ist die Haupterstreckungsebene des Trägers in der Arbeitsposition rechtwinklig zu dem Behälterboden ausgerichtet. Wird der Materialsammelbehälter mit der Vorrichtung fortbewegt, beispielsweise wenn der Materialsammelbehälter auf einem Fahrzeug befindlich ist, befindet sich der Träger in der Transportposition, bevorzugt parallel zum Behälterdeckel, wobei der Behälterdeckel den Behälter verschließt und der Träger möglichst flach auf dem Behälterdeckel aufliegt, um die Fahrzeughöhe nicht über ein zulässiges Maximalmaß zu erhöhen.

Der Verstellantrieb umfasst einen weiteren Stellzylinder, bevorzugt einen Hydraulikzylinder, mittels dem der Behälterdeckel gekippt wird. Dafür kann derselbe Stellzylinder genutzt werden, mit welchem der Behälterdeckel zum Entleeren des Behälters geöffnet wird.

Bevorzugt erfolgen das Schwenken des Trägers sowie das Verfahren der Haltevorrichtung in die untere Entnahmeposition bei geöffnetem, d. h. gegenüber der oberen Behälteröffnung gekipptem Behälterdeckel. Dadurch ergibt sich der Vorteil, dass durch die erfindungsgemäße Vorrichtung der Materialsammelbehälter mit Behälterdeckel derart genutzt wird, dass der Weg und Kraftaufwand für den den Träger fahrenden Verstellantrieb verringert wird. Alternativ ist es bei abgewandelten Ausführungsformen aber auch möglich, den Träger um einen großen Winkel zu verschwenken, sodass der Behälterdeckel geschlossen bleiben kann, wenn der Träger in die Arbeitsposition gebracht wird.

Die obere Halteposition oder die untere Entnahmeposition, zwischen denen die Haltevorrichtung verfahren werden kann, wird durch Verfahren mittels der Antriebseinheit erreicht. In der oberen Halteposition befindet sich die Seite der Haltevorrichtung, die Richtung Behälterboden ausgerichtet ist, oberhalb des Behälterdeckels, bevorzugt in etwa auf Höhe der Schwenkachse, wobei der Träger mit der Haltevorrichtung zuvor in die Arbeitsposition gebracht wurde. In der unteren Entnahmeposition befindet sich die untere Seite der Haltevorrichtung in der Ebene des Behälterbodens oder unterhalb dieser Ebene. Alternativ ist die untere Entnahmeposition der Haltevorrichtung so gewählt, dass ein bequemes Be- und Entladen der Schläuche oder Rohre durch einen Benutzer möglich ist. Für eine ergonomische Handhabung können auch mehrere Entnahmepositionen definiert werden, die beim Entnehmen mehrerer Schläuche nacheinander angefahren werden können. Bevorzugt erfolgt dafür ein stufenweises Anfahren verschiedener Positionen zwischen der oberen Halteposition und der unteren Entnahmeposition.

Bevorzugt wird die Antriebseinheit ebenfalls durch einen Stellzylinder gebildet. Alternativ kann die Antriebseinheit durch einen Elektromotor und eine durch den Elektromotor angetriebene Seilwinde gebildet sein. Nochmals alternativ wird die Antriebseinheit durch einen Linearantrieb gebildet.

Bevorzugt ist der Verfahrweg der zwischen dem Träger und der Haltevorrichtung angeordneten und wirkenden Schienenführung rechtwinklig zur Schwenkachse ausgerichtet. Alternativ ist die Schienenführung zwischen 45° und 90° zur Schwenkachse angeordnet, so dass die Haltevorrichtung in der unteren Entnahmeposition entlang der Schwenkachse eine versetzte Position aufweist gegenüber der Position, die die Haltevorrichtung in der unteren Entnahmeposition bei rechtwinkliger Schienenführung einnimmt. Die Schienenführung besteht bekanntermaßen aus zwei zusammenwirkenden Schienen.

In einer Ausführungsform weist die Haltevorrichtung einen Sicherheitsmechanismus auf. Der Sicherheitsmechanismus dient dem Festhalten der Schläuche oder Rohre während des Schwenkens des Trägers mit der Haltevorrichtung, während des Verfahrens der Haltevorrichtung gegenüber dem Träger sowie während der Fortbewegung des Materialsammelbehälters auf einem Fahrzeug. D. h. während eine Bewegung stattfindet, agiert der Sicherheitsmechanismus dermaßen, dass die Schläuche oder Rohre in ihrer jeweiligen Position auf der Haltevorrichtung gehalten werden. Erreicht die Haltevorrichtung die untere Entnahmeposition wird der Sicherheitsmechanismus deaktiviert und somit ein Entnehmen der Schläuche oder Rohre durch Personen ermöglicht. Besonders bevorzugt erfolgt das Öffnen des Sicherheitsmechanismus kurz vor dem Abschluss des Verfahrens der Haltevorrichtung, also kurz bevor die untere Entnahmeposition erreicht wird. Der Sicherheitsmechanismus der Haltevorrichtung ist bevorzugt als ein Federmechanismus ausgebildet, der eine Feder zum Freigeben der Schläuche oder Rohre umfasst.

In einer weiteren Ausführungsform wirkt zusätzlich zu dem Hydraulikzylinder mindestens eine pneumatische Feder als Verstellantrieb zwischen dem Behälterdeckel und dem Träger. Besonders bevorzugt sind zwei pneumatische Federn zwischen dem Behälterdeckel und dem Träger angeordnet. Bevorzugt ist die pneumatische Feder als Gasfeder ausgebildet.

In einer Ausführungsform ist der Träger als ein rechteckiger Rahmen ausgebildet, wobei die Trägerseiten parallel zu den Behälterdeckelseiten angeordnet sind. Besonders bevorzugt weist der Träger drei Rahmenteile auf, die parallel zu den Behälterdeckelseiten entsprechend einer offenen Rechteckform angeordnet sind.

Der erfindungsgemäße Saugbagger umfasst einen zuvor beschriebenen Materialsammelbehälter mit kippbarem Behälterdeckel und eine zuvor beschriebene Vorrichtung zur Aufnahme und zum Transport von Schläuchen oder Rohren. Die beschriebenen Ausführungsformen gelten auch für den Saugbagger.

Des Weiteren ist bevorzugt an dem Fahrzeug ein Bedienelement zum Bedienen der Antriebseinheit vorgesehen. Bevorzugt ist dies an einer für das Bedienpersonal leicht zugänglichen Stelle angeordnet.

Besonders bevorzugt befindet sich die Seite der Haltevorrichtung, die Richtung Behälterboden ausgerichtet ist, in der unteren Entnahmeposition in etwa auf Höhe des Fahrzeugbodens.

In einer Ausführungsform ist das Schwenken des Trägers nicht notwendig, wenn der Behälterdeckel dermaßen gekippt ist, dass zwischen einer Behälteroberseite und dem Behälterdeckel ein Winkel zwischen 60° und 90° besteht.

Gemäß einer weiteren Ausführung der Vorrichtung ist der Träger abgewandelt ausgebildet, insbesondere unter Verzicht auf die Schwenkachse. Stattdessen ist der Träger unschwenkbar auf dem Behälterdeckel montiert. Um die Haltevorrichtung in die untere Entnahmeposition verfahren zu können, wird der Behälterdeckel weit geöffnet, sodass der Behälterdeckel zur Behälteroberseite vorzugsweise einen Winkel wischen 75° und 90° einnimmt. Die Haltevorrichtung kann dann parallel zum Träger nach unten verfahren werden, ohne dass der Träger gegenüber dem Behälterdeckel verschwenkt werden muss.

Der erfindungsgemäße Saugbagger hat den Vorteil, dass mehrere Schläuche oder Rohre einfach und sicher auf dem Materialsammelbehälter oder dem Fahrzeug gelagert, mittels diesem transportiert und ohne großen Kraftaufwand durch Personen auf den Materialsammelbehälter oder das Fahrzeug befördert werden können. Somit ist es nicht notwendig, dass Personen unter erhöhten Sicherheitsrisiken auf den Materialsammelbehälter oder das Fahrzeug steigen, da das Be- und Entladen vom Erdboden aus erfolgt.

Weitere Vorteile und Einzelheiten der vorliegenden Erfindung ergeben sich aus der nachfolgenden Beschreibung einer bevorzugten Ausführungsform, unter Bezugnahme auf die Zeichnung. Es zeigen:
- Fig. 1: eine perspektivische Ansicht eines Saugbaggers mit einem Materialsammelbehälter, der einen kippbaren Behälterdeckel aufweist, auf welchem eine erste Ausführungsform einer erfindungsgemäße Vorrichtung zur Aufnahme und zum Transport von Schläuchen oder Rohren montiert ist;
- Fig. 2: eine perspektivische Ansicht des Saugbaggers, wobei der Behälterdeckel mitsamt der Vorrichtung gekippt ist;
- Fig. 3: eine perspektivische Ansicht des Saugbaggers, wobei der Behälterdeckel gekippt und ein Teil der Vorrichtung geschwenkt ist;
- Fig. 4: eine perspektivische Ansicht des Saugbaggers, wobei der Behälterdeckel gekippt, ein Teil der Vorrichtung geschwenkt und eine Haltevorrichtung in eine untere Position gefahren ist;
- Fig. 5: eine perspektivische Ansicht des Saugbaggers mit dem Materialsammelbehälter mit geöffnetem Behälterdeckel, auf welchem eine zweite Ausführungsform der Vorrichtung zur Aufnahme und zum Transport von Schläuchen oder Rohren montiert ist;
- Fig. 6: eine rückwärtige Ansicht des Saugbaggers mit der zweiten Ausführungsform der Vorrichtung.

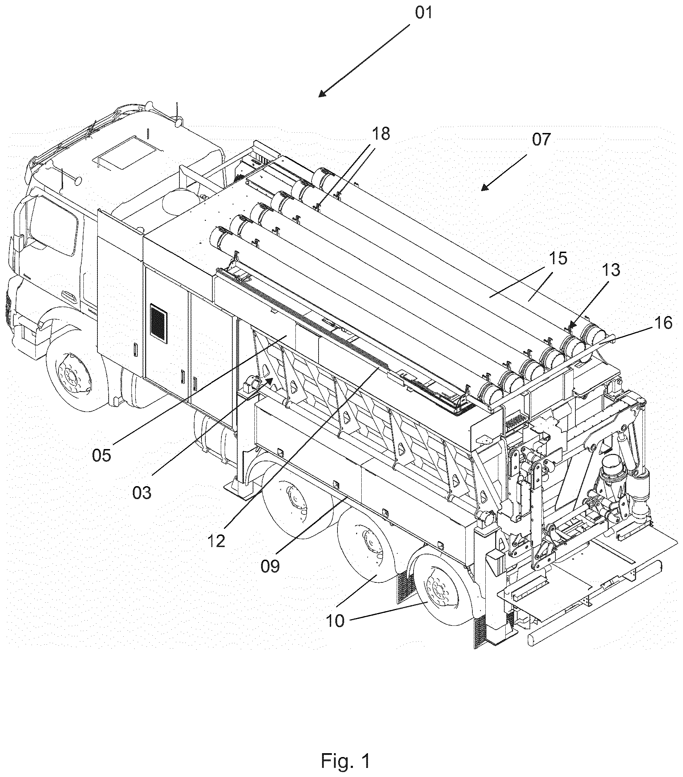

Fig. 1 zeigt eine perspektivische Ansicht eines Saugbaggers 01 mit einem Materialsammelbehälter 03, der einen kippbaren Behälterdeckel 05 aufweist. Auf dem Behälterdeckel 05 ist eine Vorrichtung 07 zur Aufnahme und zum Transport von Schläuchen oder Rohren montiert. Der Materialsammelbehälter 03 dient der Aufnahme von Sauggut, welches mittels des Saugbaggers 01 aufgenommen und danach abtransportiert wird. Der Behälterdeckel 05 befindet sich auf der Oberseite des Materialsammelbehälters 03. Der Materialsammelbehälter 03 besitzt einen Behälterboden 09. Der Saugbagger 01 weist mehrere Räder 10 auf, die der Fortbewegung des Saugbaggers 01 dienen.

Die Vorrichtung 07 umfasst einen Träger 12, der auf dem Behälterdeckel 05 angebracht ist. Der Träger 12 ist bevorzugt aus Metall gefertigt. Die Vorrichtung 07 umfasst weiterhin eine Haltevorrichtung 13 die mehrere Schläuche oder Rohre 15 aufnimmt. Die Haltevorrichtung 13 besteht aus einem Gestell 16 und mehreren Aufnahmen 18, die am Gestell 16 angebracht sind. In jeder Aufnahme 18 liegt ein Schlauch 15, wobei sich die Aufnahmen 18 an gegenüberliegenden Seiten des Gestells 16 befinden und jeweils paarweise einen Schlauch 15 halten. Die Aufnahmen 18 sind an den Durchmesser der zu transportierenden Schläuche 15 anpassbar. Die Schläuche 15 sind mittels eines Sicherheitsmechanismus befestigt. Die Haltevorrichtung 13 ist am Träger 12 angebracht.

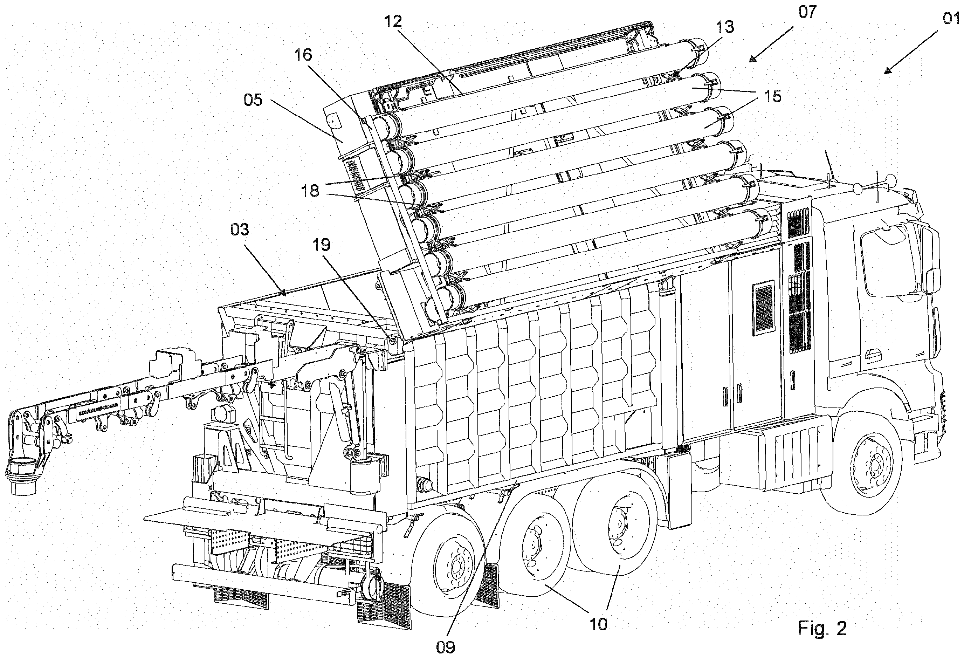

Fig. 2 zeigt eine perspektivische Ansicht des Saugbaggers 01. Im Unterschied zu Fig. 1 ist der Behälterdeckel 05 mitsamt der Vorrichtung 07 gekippt bzw. aufgeklappt dargestellt. Der Behälterdeckel 05 ist um eine Deckelachse 19 kippbar. Die Deckelachse 19 verläuft entlang einer Seite des Behälterdeckels 05. Es sind aber auch Ausführungsformen möglich, bei denen der Behälterdeckel mit zwei Deckelachsen ausgerüstet ist, sodass das Öffnen des Behälterdeckels nach beiden Seiten möglich ist.

Der Träger 12 befindet sich in Fig. 1 in einer Transportposition, wobei der Träger 12 parallel zu dem Behälterdeckel 05 liegt. Der Behälterdeckel 05 sowie der Träger 12 und die Haltevorrichtung 13, der Vorrichtung 07, liegen auch in Fig. 2 noch parallel zueinander, wenngleich der Saugbagger in dem in Fig. 2 gezeigten Zustand nicht mehr auf der Straße gefahren werden sollte, da die dafür zulässige Höhe überschritten wäre.

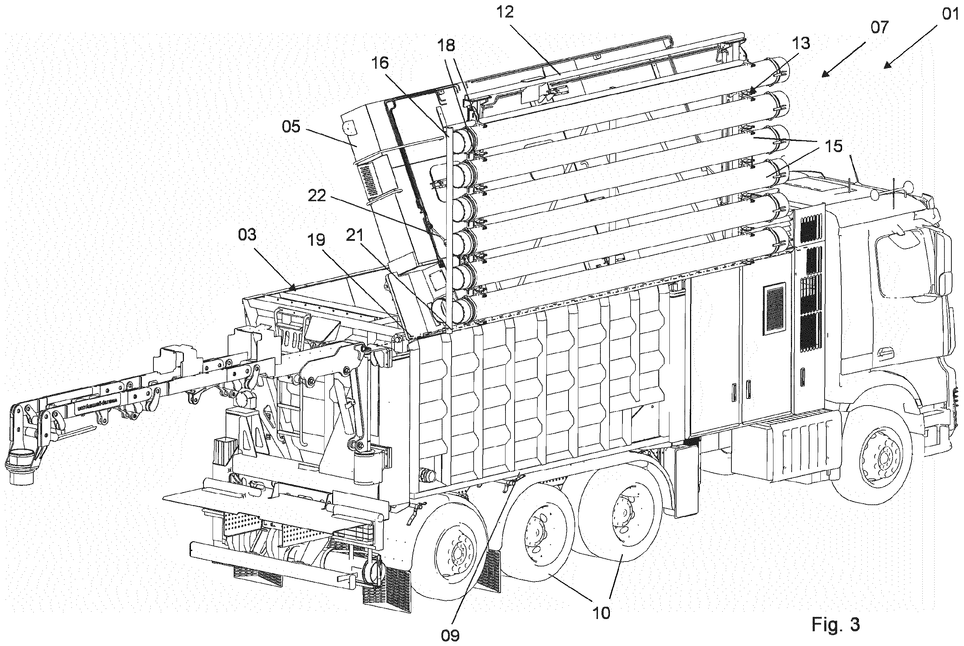

Fig. 3 zeigt eine perspektivische Ansicht des Saugbaggers 01. Im Unterschied zu Fig. 1 ist der Behälterdeckel 05 mitsamt der Vorrichtung 07 gekippt bzw. aufgeklappt dargestellt. Weiterhin und im Unterschied zu Fig. 2 ist die Vorrichtung 07 gegenüber dem Behälterdeckel 05 geschwenkt. Der Träger 12 weist dazu eine Schwenkachse 21 auf, die parallel zur Deckelachse 19 auf einer Seite des Gestells 16 verläuft, wobei diese Gestellseite auf derselben Seite wie die Behälterdeckelseite, auf der die Deckelachse 19 befindlich ist, angeordnet ist. Entlang der Schwenkachse 21 ist der Träger 12 gegenüber dem Behälterdeckel 05 schwenkbar. Die Deckelachse 19 und die Schwenkachse 21 sind auf derselben Behälterseite angeordnet und verlaufen parallel. Der Träger 12 und der Behälterdeckel 05 sind durch zwei Stellzylinder 22 (nachfolgend auch als Hydraulikzylinder bezeichnet) miteinander verbunden. Mittels der Hydraulikzylinder 22 wird der Träger 12 gegenüber dem Behälterdeckel 05 an der Schwenkachse in eine Arbeitsposition geschwenkt, wobei der Träger 12 gegenüber der Behälteroberseite senkrecht, also in einem 90°-Winkel, anliegt. Da die Behälteroberseite und der Behälterboden 09 parallel zueinander liegen, ist der Träger 12 demnach auch senkrecht gegenüber dem Behälterboden 09 ausgerichtet. Mit dem Träger 12 wird auch die Haltevorrichtung 13 mitsamt den darauf befindlichen Schläuchen 15 geschwenkt. Die Haltevorrichtung 13 nimmt demnach eine obere Halteposition ein.

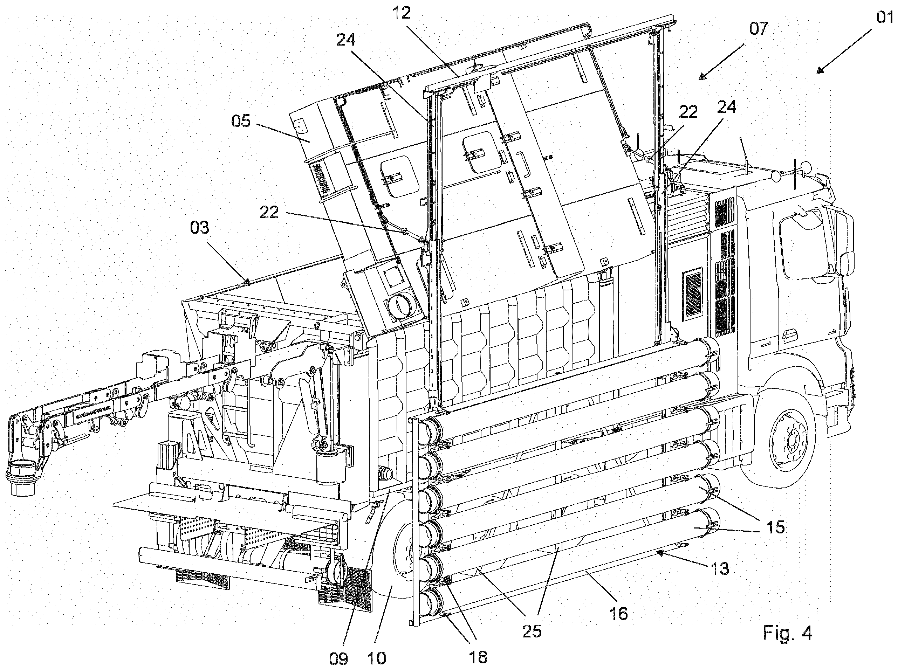

Fig. 4 zeigt eine perspektivische Ansicht des Saugbaggers 01. Weiterhin gleicht die Fig. 4 zunächst der Fig. 3, wobei zusätzlich zur in Fig. 3 gezeigten Verkippung des Behälterdeckels 05 mit dem Träger 12 und der Haltevorrichtung 13 sowie des geschwenkten Trägers 12, nun die Haltevorrichtung 13 in eine untere Entnahmeposition gefahren ist. Die Haltevorrichtung 13 und der Träger 12 sind dafür über eine Schienenführung 24 miteinander bewegliche verbunden. D. h. die aus zwei Schienen bestehende Schienenführung 24 erlaubt eine Bewegung der Haltevorrichtung 13 relativ zum Träger 12 entlang der Schienenlängsachse. Der Träger 12 und die Haltevorrichtung 13 sind zueinander parallel verfahrbar. Hierbei ist eine Schiene auf der Haltevorrichtung 13 und eine korrespondierende Schiene auf dem Träger 12 befestigt. Es ist bevorzugt eine stufenweise Bewegung zwischen der oberen Halteposition und der unteren Entnahmeposition möglich. Die Haltevorrichtung 13 ist in der zum Behälterboden 09 senkrechten Position zwischen der oberen Halteposition und der unteren Entnahmeposition fahrbar, so dass die auf der Haltevorrichtung 13 befindlichen Schläuche 15 vom Bedienpersonal mit geringem Aufwand entnommen werden können. Vor dem Entnehmen wird der Sicherheitsmechanismus entriegelt und somit werden die Schläuche 15 in der Aufnahme 18 frei gegeben. In der unteren Entnahmeposition befindet sich die untere Seite der Haltevorrichtung 13 auf einer Höhe zwischen dem Behälterboden 09 und dem Erdboden. Das Verfahren der Haltevorrichtung 13 erfolgt mit einer Antriebseinheit. Zur Stabilisierung der Haltevorrichtung 13 weist das Gestell 16 Streben 25 auf.

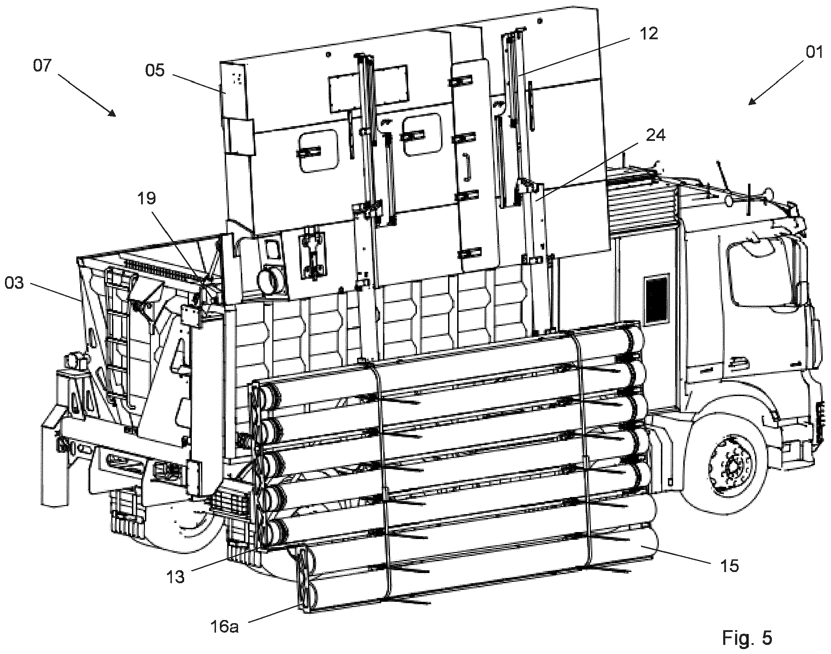

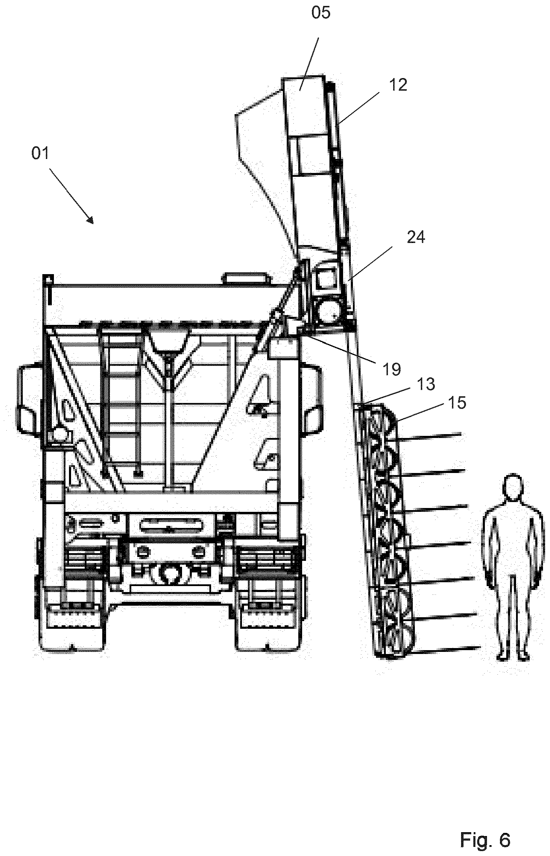

Fig. 5 und Fig. 6 zeigen den Saugbagger 01 mit der Vorrichtung 07 gemäß einer abgewandelten Ausführungsform. Ein wesentlicher Unterschied zu der oben beschriebenen Ausführung besteht darin, dass der Träger 12 nicht mehr schwenkbar ist sondern fest auf dem Behälterdeckel 05 montiert ist. Um die Schläuche 15 aus der Haltevorrichtung 13 zu entnehmen, wird der Behälterdeckel 05 zunächst weit geöffnet, bis er vorzugsweise nahezu senkrecht steht, d. h. zur Behälteroberkante in einem Winkel von ca. 85°. Der Träger 12 befindet sich dann automatisch in der Arbeitsposition, ohne dass er gegenüber dem Behälterdeckel verschwenkt werden muss.

In den Figuren 5 und 6 ist die Haltevorrichtung 13 bereits in die untere Entnahmeposition verfahren. Dazu dient auch in diesem Fall die Schienenführung 24.

Die in den Figuren 5 und 6 gezeigte Ausführung weist darüber hinaus noch abgewandelte Details auf, die nachfolgend erläutert werden. Diese Details können grundsätzlich auch in der Ausführung gemäß den Figuren 1 bis 4 angewendet werden.

Die Haltevorrichtung 13 umfasst ein abgewandeltes Gestell 16a, in dem bis zu 34 m Schlauch transportiert werden können. Dazu sind fünf Aufnahmen für bis zu 5 m lange Schläuche sowie zwei Aufnahmen für bis zu 4,5m lange Schläuche vorgesehen. Die Schläuche sind in den Aufnahmen eingesetzt einzeln mit Klettbändern befestigt. Durch den Verzicht auf einen Klemmmechanismus für die Schläuche können die Aufnahmen enger zueinander angeordnet werden, sodass mehr Platz für die Schläuche bereit steht. Für den Transport auf der Straße können für eine zusätzliche Sicherung noch Spanngurte über die Schläuche gezogen werden.

Für die Verschiebung der Haltevorrichtung 13 entlang der Schienenführung 24 werden hydraulische Teleskopschübe verwendet, welche die Antriebseinheit bilden und die oben erwähnte Seilwinde ersetzen.

Die Vorrichtung 01 besitzt bevorzugt etwa dieselbe Breite wie der Behälterdeckel und erhöht den Aufbau des Fahrzeugs 01 nur wenig, beispielsweise etwas um maximal 30 - 40 cm.

### Bezugszeichenliste

- 01: Saugbagger
- 02: -
- 03: Materialsammelbehälter
- 04: -
- 05: Behälterdeckel
- 06: -
- 07: Vorrichtung
- 08: -
- 09: Behälterboden
- 10: Räder
- 11: -
- 12: Träger
- 13: Haltevorrichtung
- 14: -
- 15: Schlauch / Rohr
- 16: Gestell
- 17: -
- 18: Aufnahme
- 19: Deckelachse
- 20: -
- 21: Schwenkachse
- 22: Hydraulikzylinder / Stellzylinder
- 23: -
- 24: Schienenführung
- 25: Streben

## Patentansprüche

1. Saugbagger (01) mit einem Materialsammelbehälter (03) für ein Fahrzeug, wobei der Materialsammelbehälter einen Behälterboden (09), einen um eine Deckelachse (19) kippbaren Behälterdeckel (05), der in eine geöffnete Stellung verschwenkbar ist, in welcher der Behälterdeckel (05) zum Behälterboden (09) in einem Winkel zwischen 80° und 90° steht, und eine auf dem Behälterdeckel (05) angeordnete Vorrichtung (07) zur Aufnahme und zum Transport von Schläuchen oder Rohren (15) umfasst, wobei die Vorrichtung (07) umfasst:
- einen Träger (12), der auf dem Behälterdeckel (05) angebracht ist;
- eine Haltevorrichtung (13) zur Aufnahme mindestens eines Schlauches oder Rohres (15), wobei die Haltevorrichtung (13) über mindestens eine Schienenführung (24) mit dem Träger (12) verbunden und parallel zu diesem verfahrbar ist; und
- eine Antriebseinheit zum Verfahren der Haltevorrichtung (13) gegenüber dem Träger (12) zwischen einer oberen Halteposition und einer unteren Entnahmeposition, in welcher sich das untere Ende der Haltevorrichtung in der Ebene des Behälterbodens oder unterhalb dieser Ebene befindet.

2. Saugbagger (01) nach Anspruch 1, **dadurch gekennzeichnet, dass** der Träger (12) nicht-schwenkbar auf dem Behälterdeckel (05) befestigt ist.

3. Saugbagger (01) nach Anspruch 1 oder 2, **dadurch gekennzeichnet, dass** die Haupterstreckungsebene des Trägers (12) in der Arbeitsposition gegenüber der Ebene des Behälterbodens (09) rechtwinklig ausgerichtet ist.

4. Saugbagger (01) nach Anspruch 1, **dadurch gekennzeichnet, dass** die Haltevorrichtung (13) einen Sicherheitsmechanismus zum Freigeben oder Festhalten der Schläuche oder Rohre (15) aufweist, wobei das Freigeben bevorzugt selbsttätig erfolgt, wenn die Haltevorrichtung (13) die Entnahmeposition erreicht.

5. Saugbagger (01) nach Anspruch 4, **dadurch gekennzeichnet, dass** der Sicherheitsmechanismus der Haltevorrichtung (13) mindestens eine mechanische Feder umfasst, damit die Bauteile (15) freigebbar sind.

6. Saugbagger (01) nach Anspruch 1, **dadurch gekennzeichnet, dass** die Antriebseinheit zum Verfahren der Haltevorrichtung (13) ausgewählt ist aus folgenden Antriebseinheiten:
- eine Seilwinde mit einem Elektromotor;
- ein Stellzylinder;
- ein oder mehrere hydraulisch betätigte Teleskopschübe.

7. Saugbagger (01) nach Anspruch 1, **dadurch gekennzeichnet, dass** die zwischen dem Träger (12) und der Haltevorrichtung (13) angeordnete Schienenführung (24) rechtwinklig zur Deckelachse (19) des kippbaren Behälterdeckels (05) ausgerichtet ist.

## Claims

1. A suction excavator (01) that includes a material collection container (03) for a vehicle, wherein the material collection container (03) comprises a container base (09), a container cover (05) that is tiltable about a cover axis (19), and which is pivotable into an open position in which the angle between the container cover (05) and the container base (09) is between 80° and 90°, and a device (07) situated on the container cover (05) for receiving and transporting pipes or tubes (15), wherein the device (07) comprises:
- a carrier (12) that is mounted on the container cover (05);
- a holding device (13) for accommodating at least one pipe or tube (15), wherein the holding device (13) is connected via at least one rail guide (24) to the carrier (12) and movable in parallel to same; and
- a drive unit for moving the holding device (13) relative to the carrier (12) between an upper holding position and a lower removal position in which the lower end of the holding device is situated in the plane of the container base or below this plane.

2. A suction excavator (01) according to Claim 1, **characterized in that** the carrier (12) is nonpivotably fastened to the container cover (05).

3. The suction excavator (01) according to Claim 1 or 2, **characterized in that** the main plane of extension of the carrier (12) in the working position is oriented at a right angle with respect to the plane of the container base (09).

4. The suction excavator (01) according to Claim 1, **characterized in that** the holding device (13) has a safety mechanism for releasing or securing the pipes or tubes (15), wherein the release preferably takes place automatically when the holding device (13) reaches the removal position.

5. The suction excavator (01) according to Claim 4, **characterized in that** the safety mechanism of the holding device (13) includes at least one mechanical spring by means of which the components (15) are releasable.

6. The suction excavator (01) according to Claim 1, **characterized in that** the drive unit for moving the holding device (13) is selected from the following drive units:
- a cable winch together with an electric motor;
- an actuating cylinder;
- one or more hydraulically actuated telescoping push arms.

7. The suction excavator (01) according to Claim 1, **characterized in that** the rail guide (24) situated between the carrier (12) and the holding device (13) is oriented at a right angle to the cover axis (19) of the tiltable container cover (05).

## Revendications

1. Excavatrice aspiratrice (01), pourvue d'un conteneur collecteur (03) de matière pour un véhicule, le conteneur collecteur de matière comprenant un fond inférieur (09) de conteneur, un couvercle (05) de conteneur, susceptible de basculer autour d'un axe (19) de couvercle qui est susceptible de pivoter dans une position ouverte dans laquelle le couvercle (05) de conteneur forme avec le fond inférieur (09) de conteneur un angle compris entre 80° et 90° et un dispositif (07) placé sur le couvercle (05) de conteneur, destiné à recevoir et à transporter des flexibles ou des tuyaux (15), le dispositif (07) comprenant :
- un support (12), qui est monté sur le couvercle (05) de conteneur ;
- un dispositif de retenue (13), destiné à recevoir au moins un flexible ou un tuyau (15), le dispositif de retenue (13) étant relié avec le support (12) par l'intermédiaire d'au moins un guidage à glissière (24) et étant déplaçable à la parallèle de celui-ci ; et
- une unité d'entraînement, destinée à déplacer le dispositif de retenue (13) par rapport au support (12), entre une position de retenue supérieure et une position de retrait inférieure, dans laquelle l'extrémité inférieure du dispositif de retenue se trouve dans le plan du fond inférieur de conteneur ou en-dessous dudit plan.

2. Excavatrice aspiratrice (01) selon la revendication 1, **caractérisée en ce que** le support (12) est fixé de manière non-pivotante sur le couvercle (05) de conteneur.

3. Excavatrice aspiratrice (01) selon la revendication 1 ou 2, **caractérisée en ce que** dans la position de travail, le plan d'extension principale du support (12) est orienté à angle droit par rapport au fond inférieur (09) de conteneur.

4. Excavatrice aspiratrice (01) selon la revendication 1, **caractérisée en ce que** le dispositif de retenue (13) comporte un mécanisme de sécurité, destiné à libérer ou à maintenir les flexibles ou les tuyaux (15), la libération s'effectuant de préférence de manière automatique, lorsque le dispositif de retenue (13) atteint la position de retrait.

5. Excavatrice aspiratrice (01) selon la revendication 4, **caractérisée en ce que** le mécanisme de sécurité du dispositif de retenue (13) comprend au moins un ressort mécanique, pour que les éléments de construction (15) puissent être libérés.

6. Excavatrice aspiratrice (01) selon la revendication 1, **caractérisée en ce que** l'unité d'entraînement destinée à déplacer le dispositif de retenue (13) est sélectionnée parmi les unités d'entraînement suivantes :
- un treuil à câble pourvu d'un moteur électrique ;
- un vérin ;
- un ou plusieurs poussoirs télescopiques à manoeuvre hydraulique.

7. Excavatrice aspiratrice (01) selon la revendication 1, **caractérisée en ce que** le guidage à glissière (24) placé entre le support (12) et le dispositif de retenue (13) est orienté à angle droit par rapport à l'axe (19) de couvercle du couvercle (05) de conteneur susceptible de basculer.
